# EUROPEAN PATENT APPLICATION

(11) **EP 3 708 007 A1**
(43) Date of publication of application: **16.09.2020**
(21) Application number: 19858676.0
(22) Date of filing: 15.03.2019
(51) Int. Cl.: A23C 1/00

(54) **FORWARD OSMOSIS PRINCIPLE-BASED PREPARATION METHOD FOR DAIRY PRODUCTS**

(30) Priority: 03.02.2019 CN 201910108658
(71) Applicant: INNER MONGOLIA MENGNIU DAIRY (GROUP) CO., LTD., Hohhot, Inner Mongolia 011500 (CN)
(72) Inventor: FAN, Mengyuan, Hohhot Inner Mongolia 011500 (CN); ZHANG, Jie, Hohhot Inner Mongolia 011500 (CN); REN, Xianfeng, Hohhot Inner Mongolia 011500 (CN); WANG, Hui, Hohhot Inner Mongolia 011500 (CN); YU, Weizu, Hohhot Inner Mongolia 011500 (CN); JIANG, Li, Hohhot Inner Mongolia 011500 (CN); SHI, Hanyu, Hohhot Inner Mongolia 011500 (CN); SHI, Hongli, Hohhot Inner Mongolia 011500 (CN)
(74) Representative: Patentanwälte Bals & Vogel
(86) International application number: PCT/CN2019/078331
(87) International publication number: WO 2020/155325

(57) **Abstract**

The present application relates to a method for preparing a dairy product based on the principle of forward osmosis, and more particularly to a process for processing high quality full-fat concentrated milk based on the principle of forward osmosis. For the first time, the present application applies the forward osmosis membrane concentration technology to the food processing industry (especially the dairy processing industry) in a scale, and achieves multiple concentration of the target solution by controlling the osmotic pressure difference between the solutions on both sides of the forward osmosis membrane; while no heat source or strong external pressure is introduced, and the main nutrient content and nutrient ratio of the target solution are maintained. Compared with a reverse osmosis membrane concentration method and a freeze concentration method, the forward osmosis membrane concentration technology used in the present application can greatly increase the concentration multiple of the dairy product, reduce the unit energy consumption, save the running cost, and provide technical support for creating a new dairy product. The present application also relates to the concentrated dairy product prepared by the above method for preparing a dairy product based on the principle of forward osmosis, and the continuous forward osmosis membrane system applied in the field of dairy product concentration, thereby realizing the scaled treatment of dairy product concentration. At the same time, it ensures that the microbial indicators, physical and chemical indicators and nutritional indicators of concentrated dairy products can meet the requirements of relevant standards.

## Description

### FIELD OF THE INVENTION

The present application relates to a method for preparing a dairy product based on a (the) principle of forward osmosis, and more particularly to a process for processing a high quality full-fat concentrated dairy product and/or a defatted concentrated dairy product based on a principle of forward osmosis. The present application also relates to a concentrated dairy product prepared by the method of preparing a dairy product, and a continuous forward osmosis membrane system for use in the field of dairy product concentration.

### BACKGROUND OF THE INVENTION

Cow milk is a very complex liquid food system containing about 3% protein, about 4% fat, about 4% lactose, and various nutraceuticals. At present, consumers are increasingly demanding the nutritional and quality requirements of dairy products. Therefore, special attention should be paid to the maintenance of the stability of the cow milk system (the stability of the milk emulsion and its impact on the nutrition of cow milk during dairy processing) . The concentration of cow milk is an extremely important processing technology in the dairy processing industry. It plays an irreplaceable role in important fields such as milk source regulation, product quality improvement and raw material regulation. Generally, the traditional concentration method for cow milk concentration removes water in the cow milk by heating. However, due to the high temperature treatment, this operation causes great damage to the nutrient retention and the flavor of the cow milk itself, and brings about adverse consequences such as yellowing of the color and heavy cooking taste, seriously affecting the product quality of dairy products. Moreover, the energy consumption of the evaporation process in the conventional concentration method is relatively large. In the traditional thermal condensation method for cow milk, falling film concentration is a relatively frontier concentration process, but even with the falling film concentration, evaporation is still used to remove water molecules, which still has a non-negligible effect on the nutrients of the final product. Especially at present, under the conditions that consumers are increasingly demanding nutrients, the degradation of lactoferrin by thermal concentration including the falling film concentration has gradually become unacceptable.

Forward osmosis membrane concentration is a new membrane concentration technology that is maturely applied in environmental science. However, in the food processing industry, the forward osmosis membrane concentration is a very cutting-edge processing technology in both international and domestic scope, and is hardly used in scaled processing methods. The technique achieves concentration of the target solution by controlling the osmotic pressure difference of the solution at both ends of the forward osmosis membrane without introducing any heat source or strong external pressure, thereby maintaining main nutrients and ratio of nutrients of the target solution. Its effect on the flavor of the target solution is also much lower than that of traditional concentration methods.

Concentration methods that differ from conventional thermal concentration methods in the dairy processing industry further include reverse osmosis membrane concentration methods and freeze concentration methods. In the reverse osmosis membrane concentration method, the reverse osmosis membrane can also achieve a certain degree of concentration of the material, but the concentration multiple that can be achieved is lower, which is much lower than that of the concentration method of the forward osmosis membrane. Another optional concentration technique is freeze-concentration, which uses the difference between the freezing point of pure water and the freezing point of cow milk to concentrate the cow milk, but it is well known that freezing is a very energy-intensive operation and may cause irreversible damage to the properties of the product.

Compared with the above two concentration methods, the forward osmosis membrane concentration technology can greatly enhance the concentration multiple of dairy products, and at the same time, reduce energy consumption and cost, and provide technical support for creating new products of dairy products. In addition, the equipment maintenance cost and operating cost of forward osmosis concentration technology are also much better than reverse osmosis concentration technology and traditional thermal concentration technology.

The concentrated milk in the market is usually prepared by evaporation, falling film concentration and the like, and specific products include Burra Foods concentrated milk and the like. However, no domestic or international company has realized the use of the principle of forward osmosis to continuously produce concentrated milks in a large scale.

In addition, commercial continuous forward osmosis systems have never been used in the field of cow milk concentration, and because the cow milk is a nutrient-rich and process-sensitive material, the traditional forward osmosis membrane system used in the water treatment industry cannot be used directly in the field of dairy products. At present, there is no continuous forward osmosis membrane system specially designed for cow milk concentration, both domestically and internationally. It is very difficult to ensure that the microbial indicators, physical and chemical indicators and nutritional indicators of the products can meet the requirements of relevant standards after the cow milk is concentrated. Therefore, the continuous forward osmosis commercial concentration system specially designed for cow milk in this application is of great significance.

### SUMMARY OF THE INVENTION

In order to solve the defects existing in the prior art, the present application provides a method for preparing a dairy product based on the principle of forward osmosis, in particular to a process for processing a high quality full-fat concentrated dairy product and/or a defatted concentrated dairy product based on the principle of forward osmosis. The method is capable of scaled processing of raw milk, and the concentrated dairy product prepared is preferably a full-fat concentrated dairy product and/or a defatted concentrated dairy product. Moreover, the present application also provides a continuous forward osmosis system comprising a plurality of forward osmosis membrane modules. The continuous forward osmosis system is capable of continuously processing fresh cow milk to achieve scaled treatment of cow milk concentration.

For the first time, the present application applies the forward osmosis membrane concentration technology to the food processing industry (especially the dairy processing industry) on a large scale, and achieves multiple concentration of the target solution by controlling the osmotic pressure difference between the solutions at both ends of the forward osmosis membrane; without introducing any heat source or strong external pressure, thereby maintaining main nutrients and ratio of nutrients of the target solution. Its effect on the flavor of the target solution is also much lower than that of traditional thermal concentration methods.

The forward osmosis membrane system used in the present application comprises two cycles, i.e., a feed cycle (a fresh cow milk cycle) and a draw solution cycle, and water is extracted from the fresh cow milk through the forward osmosis membrane into the draw solution; as the system operates, the fresh cow milk is continuously concentrated and the draw solution is continuously diluted. For a forward osmosis membrane system, the most critical technical parameter is membrane flux, i.e., the volume of water passing through the membrane per unit area per unit time. The larger the membrane flux, the higher the concentration efficiency. Main factors affecting the membrane flux include: the type of concentrated product, the type and concentration of the draw solution, the difference in flow between two sides, the temperature, the type selection of the forward osmosis membrane. In addition to the membrane flux, in the commercial processing of forward osmosis concentration, the ratio of feed amount to membrane area is also very important. If the ratio is too large, the membrane fouling is too large, causing the concentration to fail to complete. If the ratio is too small, the membrane investment is wasted and the cost is increased. In addition, the present application achieves the technical effect of full-fat cow milk concentration (i.e., the total solid content of the final product is 15-60%) by designing the forward osmosis system and setting the process parameters; and the product characteristics of the obtained concentrated milk are characterized by means of detection.

Compared with reverse osmosis membrane concentration methods and freeze concentration methods, the forward osmosis membrane concentration technology used in the present application can greatly enhance the concentration multiple of dairy products, and at the same time, reduce energy consumption and cost, and provide technical support for creating new products of dairy products. As we all know, freezing is a very energy-intensive operation, and will cause irreversible damage to the nature of the product. In addition, the equipment maintenance cost and operating cost of forward osmosis concentration technology are also much better than reverse osmosis concentration technology and traditional thermal concentration technology.

The present application also relates to a continuous forward osmosis system comprising a plurality of forward osmosis membrane modules. The continuous forward osmosis system is capable of continuously processing fresh cow milk to achieve scaled treatment of cow milk concentration. The continuous forward osmosis system comprises a single or multiple forward osmosis membrane modules (preferably four forward osmosis membrane modules), a reverse osmosis membrane module for recovering the draw solution, a raw material tank, a product tank, and a draw solution tank (preferably two draw solution tanks); the plurality of forward osmosis membrane modules are preferably connected to each other in series, and constitute a feed cycle together with the raw material tank and the product tank; the forward osmosis membrane, the reverse osmosis membrane and the draw solution tank (preferably two draw solution tanks) together constitute a draw solution cycle, and the forward osmosis membrane is simultaneously in two cycles of the feed cycle and the draw solution cycle.

### BRIEF DESCRIPTION OF THE DRAWINGS

Figure 1 shows a schematic diagram of a cycle of a forward osmosis membrane system.
Figure 2 shows a schematic diagram of a continuous forward osmosis membrane system.
Figure 3 shows a schematic diagram of an adding method A of a draw solution.
Figure 4 shows a schematic diagram of an adding method B of a draw solution.
Figure 5 shows a schematic diagram of an adding method C of a draw solution.
Figure 6 shows a schematic diagram of an adding method D of a draw solution.

This application relates to the following:
The following is a detailed description of the forward osmosis membrane system and the dairy preparation method using the same, the concentrated dairy product obtained by the preparation method, and the continuous forward osmosis system including a plurality of forward osmosis membrane modules which are involved in the present application.

### Forward osmosis membrane system and preparation method of concentrated dairy product using the same

The present application relates to a method of preparing a concentrated dairy product comprising the step of processing raw milk using a forward osmosis membrane system.

The concentrated dairy product prepared by the preparation method of the present application may include a full-fat concentrated dairy product and/or a defatted concentrated dairy product. The concentrated dairy product obtained after the treatment has a total solid content of 15 to 60%, preferably 20 to 55%, and more preferably 25 to 50%.

The forward osmosis membrane system of the present application is preferably a system capable of scaled processing of raw milk.

In one aspect, the forward osmosis membrane system includes at least two cycles: a feed cycle and a draw solution cycle. The water in the raw milk is extracted from the feed cycle through the forward osmosis membrane into the draw solution cycle, the raw milk as the feed is concentrated, and the draw solution is diluted.

In another aspect, in the forward osmosis membrane system, the ratio of the forward osmosis membrane area (in square meters) to the processed feed amount (in liters) is between 7:1 and 1:7, preferably between 3:1 and 1:3.

In another aspect, in the forward osmosis membrane system, the ratio of the flow rate on the draw solution side to the flow rate on the feed side is from 1:0.5 to 1:5, preferably from 1:1 to 1:3, and more preferably 1:2.

In another aspect, the forward osmosis membrane is one or more of a spiral wound membrane, a plate membrane, and a hollow membrane (hollow fiber membrane), preferably a spiral-wound membrane or a hollow membrane, and more preferably a hollow membrane.

### The Draw solution used in the forward osmosis membrane system

In one aspect, the draw solution used in the forward osmosis membrane system is a combination of one or more of sodium chloride, magnesium chloride, calcium chloride, lactose, and magnesium sulfate, preferably one or more of calcium chloride and magnesium sulfate, more preferably, calcium chloride.

In another aspect, the way in which the draw solution is added to the forward osmosis membrane system includes:
a) when the concentration of the draw solution is reduced to 7-8%, supplementing (an) inorganic salt(s) to restore the concentration of the draw solution to the initial concentration; wherein the initial concentration of the draw solution is preferably 5-20%, more preferably 12%; or
b) maintaining the initial concentration of the draw solution unchanged; wherein the initial concentration of the draw solution is preferably 5-20%, more preferably 8-10%; or
c) selecting not to adjust the concentration of the draw solution back; wherein the initial concentration of the draw solution is preferably 10-25%, more preferably 15-18%; or
d) selecting to continuously increase the concentration of the draw solution in a three-stage manner, wherein the initial concentration of the initial draw solution is preferably 5-20%, more preferably 8-10%; the concentration of the draw solution at the second stage is 8-22%, more preferably 10-12%; and the concentration of the draw solution at the third stage is 10-25%, more preferably 12-15%.

### Specific implementation steps of the preparation method

A method for preparing a concentrated dairy product, comprising the steps of:
1) physical and chemical testing of the raw milk;
2) cleaning the raw milk after the tested raw milk is temporarily stored, and then cooling;
3) sending the obtained raw milk to a forward osmosis membrane system for treatment to obtain concentrated milk.

In one aspect, step 1) further includes the step of filtering the raw milk that meets the requirements after the test to remove physical impurities. In the filtering step, the primary filter has a pore size of 10-1 mm (preferably 5-1 mm, more preferably 2.00 mm), and the secondary filter has a pore size of 5-0.5 mm (preferably 3-0.5 mm, more preferably 1 mm).

In another aspect, step 2) further comprises cooling the raw milk to 4-15 degrees Celsius (preferably 4-10 degrees Celsius, more preferably 7 degrees Celsius) and storing.

In another aspect, the step of filling, quick freezing and/or boxing is also included after step 3) to obtain the final product.

In another aspect, the total solid content in the raw milk obtained after the end of step 2) is between 10 and 15% (preferably 11 and 14%, more preferably 11.5 and 13%).

In another aspect, the temperature at which the raw milk enters the forward osmosis membrane system in step 3) does not exceed 20 degrees Celsius (preferably does not exceed 15 degrees Celsius, more preferably does not exceed 7 degrees Celsius), and the temperature at the outlet does not exceed 50 degrees Celsius (preferably does not exceed 30 degrees Celsius, more preferably does not exceed 20 degrees Celsius).

In another aspect, a conventional defatting separation process is added before step 3), and the resulting defatted milk continues to be prepared for concentrated milk in accordance with step 3).

### Introduction to the principle of forward osmosis and forward osmosis membrane

Forward osmosis (FO) is an infiltration process that uses a semi-permeable membrane to separate the water from dissolved solutes. The driving force for this separation is an osmotic pressure gradient, wherein the high concentration of the draw solution (relative to the feed solution) induces pure water passing through the forward osmosis membrane into the draw solution by the osmotic pressure gradient, thereby effectively separating the water from its solutes. In contrast, the reverse osmosis process uses hydraulic pressure as the driving force for separation to counteract the osmotic pressure gradient and achieve reverse migration of pure water against an osmotic pressure gradient. Therefore, reverse osmosis requires more energy than forward osmosis.

The forward osmosis membrane is a key module of the forward osmosis process and is an artificial semipermeable membrane with certain characteristics made by simulating a biological semipermeable membrane. It is generally made of a polymer material such as a membrane of cellulose acetate, a membrane of aromatic polyhydrazide, or a membrane of aromatic polyamide. The diameter of the surface micropores are generally between 0.3 and 10 nm, and the permeability is related to the chemical structure of the membrane itself. In terms of the type of membrane, commonly used forward osmosis membranes include a plate membrane, a hollow membrane, and a spiral-wound membrane.

### Specific embodiment of a forward osmosis membrane system and a method for preparing a dairy product

For a forward osmosis membrane system, the most critical technical parameter is membrane flux, i.e., the volume of water passing through the membrane per unit area per unit time. The larger the membrane flux, the higher the concentration efficiency. The main factors affecting the membrane flux include: the type of concentrated product, the type and concentration of the draw solution, the difference in flow on two sides, the temperature, and the type of membrane selected, etc. The present application achieves the technical effect of raw milk concentration (i.e., the total solid content of the final product is 15-60%; in the case of a defatted product, the total solid content of the final product is between 22% and 40%) by designing the forward osmosis system and setting the process parameters; and the product characteristics of the obtained concentrated milk are characterized by means of detection.

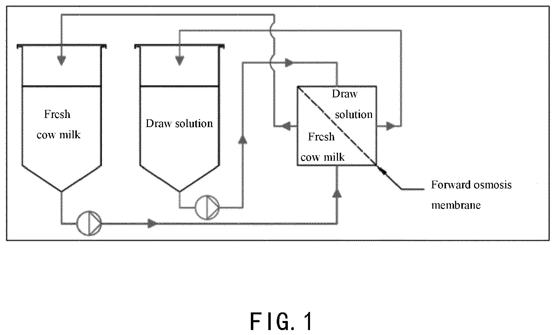

As shown in Figure 1 of the accompanying drawings, the forward osmosis membrane system of the present application comprises two cycles, a feed cycle (fresh cow milk cycle) and a draw solution cycle, and water is extracted from the fresh cow milk through the forward osmosis membrane into the draw solution; the fresh cow milk is continuously concentrated and the draw solution is continuously diluted. In a specific embodiment of the present application, the ratio of the area of the forward osmosis membrane (in square meters) to the amount of processed feed (in liters) in the forward osmosis membrane system is between 7:1 and 1:7, and the amount of treatment is between 0.1 and 25 tons per hour. The flux of water in the forward osmosis membrane is mainly determined by the difference in osmotic pressure between the two ends of the membrane; in a specific embodiment of the present application, the control of the water flux is achieved by adjusting the concentration of the draw solution; during the operation, the large swing of the water flux value tends to accelerate the fouling of the membrane, thereby affecting production efficiency.

In a particular embodiment of the present application, fresh cow milk and draw solution are separately poured into a feed tank and a draw solution tank as a starting point for each cycle. When starting the system, it is generally ensured that the circulation system on the side of the fresh cow milk is first opened, and then the liquid-extracting pump is opened to start the draw solution cycle. In addition, it should be noted that the pressure on the side of the fresh cow milk cycle should be slightly higher than the pressure on the side of the draw solution cycle to prevent the reverse osmosis during the whole operation. It should also be noted that in this system, the pressure difference between the two sides of the membrane should not exceed 1-3 bar (preferably 1-1.5 bar), preferably between 0.1 and 1 bar (preferably 0.2-0.7 bar).

During the whole concentration process, it is necessary to keep the value of the index of the system feed amount as stable as possible. If any flow rate is too fast, the original liquid (fresh cow milk) will be subjected to the next cycle before the water in the original liquid (fresh cow milk) is removed, which will affect the concentration efficiency; if any flow rate is too slow, the residence time of the original liquid on the surface of the membrane is too long, which will increase the probability of membrane fouling. For a forward osmosis membrane system, the most critical technical parameter is membrane flux, i.e., the volume of water passing through the membrane per unit area per unit time. The larger the membrane flux, the higher the concentration efficiency. The main factors affecting the membrane flux include: the type of concentrated product, the type and concentration of the draw solution, the difference in flow on two sides, the temperature, and the type of membrane selected, etc. The present application achieves the technical effect of raw milk concentration (i.e., the total solid content of the final product is 15-60%; in the case of a defatted product, the total solid content of the final product is between 22% and 40%) by designing the forward osmosis system and setting the process parameters; and product characteristics of the obtained concentrated milk are characterized by means of detection.

In general, the forward osmosis membrane concentration system of the present application comprises two cycles, a feed cycle (fresh cow milk cycle) and a draw solution cycle, wherein water is extracted from the fresh cow milk through the forward osmosis membrane into the draw solution; the fresh cow milk is continuously concentrated; and the draw solution is continuously diluted. In a specific embodiment of the present application, the ratio of the area of the forward osmosis membrane (in square meters) to the processed amount (in liters) in the forward osmosis membrane system is between 7:1 and 1:7, and the treatment amount is between 0.1 and 25 tons per hour. The flux of water in the forward osmosis membrane is mainly determined by the difference in osmotic pressure between the two ends of the membrane; in a specific embodiment of the present application, the control of the water flux is achieved by adjusting the concentration of the draw solution; during the operation, the large swing of the water flux value tends to accelerate the fouling of the membrane, thereby affecting production efficiency.

During the operation, the fresh cow milk is continuously circulated on the side of the feed cycle (fresh cow milk circulation) until the target concentration multiple is reached, and the solution on the side of the draw solution cycle is continuously diluted due to the migration of water.

In a specific embodiment of the present application, for example, the present application uses CaCl₂ as a draw solution for a forward osmotic cow milk concentration, which increases the membrane flux, thereby increasing the concentration efficiency, reducing the reverse solute flux, and not introducing other impurities besides milk components into the raw milk, and the draw solution can be recovered by a nanofiltration or reverse osmosis system to reduce sewage discharge and make the processing technology more green and environmentally friendly. Finally, the reverse solute flux is also a key parameter in the forward osmosis concentration process. A higher reverse solute flux will introduce the material in the draw solution into the feed liquid, causing the composition of the final concentrated product to change or the content of a certain component to rise, thereby affecting the quality of the final product.

### The way in which the draw solution is added

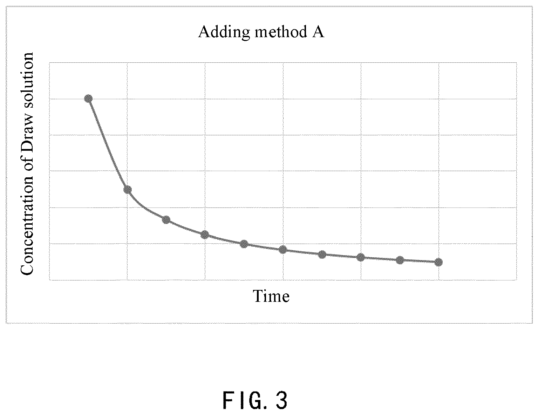

As shown in Fig. 3, the way A in which the draw solution is added refers to: the concentration of the draw solution starts from a relatively high concentration, and no solute of the draw solution is added in the middle process, and the concentration of the draw solution is automatically reduced as the water permeates from the side of the raw milk to the side of the draw solution. The advantage of this adding method is that the operation is simple, and the disadvantage is that the concentration of the draw solution in the latter stage of concentration may not be high enough, resulting in a relatively low final product concentration, but a total solid content of 25-50% can still be reached. Specifically, the examples 2 and 3 of the present application adopt the adding method A for the draw solution.

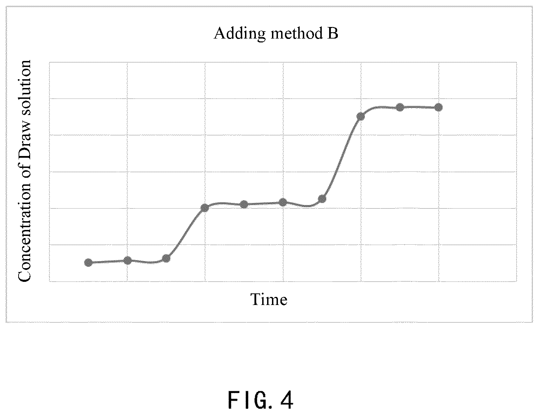

As shown in Fig. 4, the way B in which the draw solution is added refers to: the concentration of the draw solution starts from a relatively low concentration, and the solute of the draw solution is added twice in the middle process, so that the concentration of the draw solution is divided into three stages, and the concentration of each stage is higher than the previous stage. The advantages of this adding method are that the operation is relatively simple, the requirements for the online monitoring system are relatively low, and the total solid content at the concentration end point is relatively high. Specifically, the examples 5 and 8 of the present application adopt the adding method B for the draw solution.

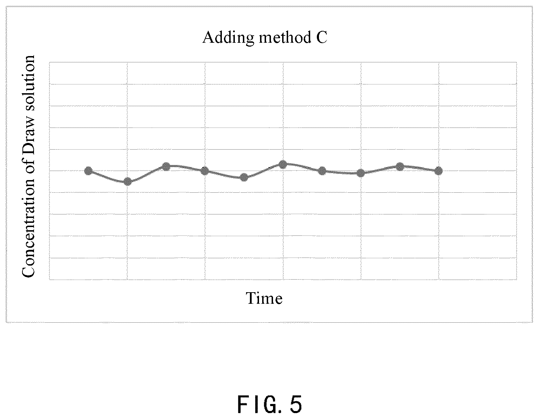

As shown in Fig. 5, the way C in which the draw solution is added refers to: the concentration of the draw solution does not change significantly from the beginning to the end. The advantage of this method is that the fluctuation of the concentration of the draw solution is small, the fluctuation of the relative flux is also small, and the fouling of the membrane is relatively small. The disadvantage is that in order to achieve a substantially constant concentration of the draw solution, it is necessary to always add the solute for the draw solution to the liquid-extracting side, and the adding amount and the timing depend on a sensitive online monitoring system, which requires high investment in the system, is difficult to operate, and is only suitable for systems in which each membrane module is equipped with a separate draw solution tank. Specifically, the examples 4, 7 and 10 of the present application adopt the adding method C for the draw solution.

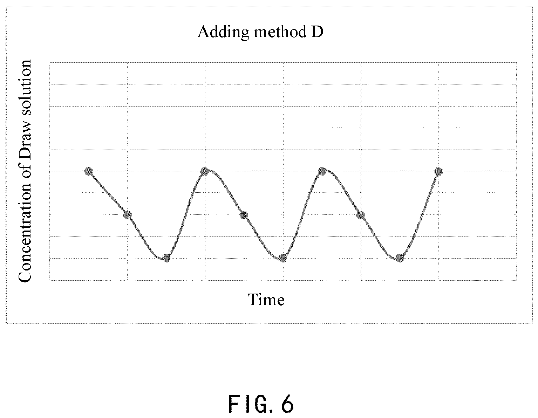

As shown in Fig. 6, the way D in which the draw solution is added refers to: the concentration of the draw solution starts from a set concentration; in the middle process, the concentration is lowered due to water absorption by the draw solution; and when the concentration is lowered to a certain set limit of a low value, the solute for the draw solution is added to bring the concentration of the draw solution back to the initial value; and the cycles are repeated. The advantage of this adding method is that the operation is simpler than the adding method C, and the membrane flux during the extraction process can be relatively stable. The requirements for the online monitoring system are still higher than the adding methods A and B. Specifically, the examples 1, 6 and 9 of the present application adopt the adding method D for the draw solution.

In addition, the choice of the flow of the raw liquid will directly affect the concentration flux and the fouling rate of the membrane. If the flow of the raw liquid is too low, the membrane surface will be easily fouled, and if the flow of the raw liquid is too high, the concentration process will not be fully performed and the concentration effect will be reduced.

Table 1 below reflects the average flux corresponding to different flow rates of the raw liquid, with a matching membrane area of 2 square meters, and a ratio of forward osmosis membrane area (in square meters) to the processed feed amount (in liters) is 5:1, in the case where the volume of the fed cow milk (10 L) and the volume of the draw solution (1.8 L) are determined.

**Table 1**

| | Flow rate of raw liquid | Volume of fed cow milk | Draw solution | Average flux |
|---|---|---|---|---|
| unit | L/H | L | L | LMH |
| 1 | 20-40 | 10 | 1.8 | 0.8-0.9 |
| 2 | 50-70 | 10 | 1.8 | 1.2-1.5 |
| 3 | 100-120 | 10 | 1.8 | 0.9-1.0 |

The temperature at which the concentration with the forward osmosis membrane is operated is also very important. The operating temperature is both limited by the operating temperature of the membrane and the microbial index of the product. The forward osmosis membrane is not suitable for operation at temperatures exceeding 50 degrees Celsius; in consideration of the requirements of the microbial index of the concentrated milk, the concentration with the forward osmosis membrane under ideal conditions is desirably carried out at a low temperature. However, the fluidity of the concentrated milk drops extremely rapidly under low temperature conditions, making concentration difficult to continue. In combination with the above factors, the operating temperature of the concentration with the forward osmosis membrane is preferably between 7 and 50 degrees Celsius (more preferably between 10 and 20 degrees Celsius).

### Concentrated dairy products

The concentrated dairy product prepared by the preparation method of the present application has a total solid content of 15 to 60%, preferably 20 to 55%, more preferably 30 to 50%; preferably, the concentrated dairy product is a full-fat product having a total solid content of 40-60% or a defatted product having a total solid content of 22%-40%.

Preferably, after the concentrated dairy product is diluted to a level of a total solid content of raw milk according to a concentration multiple, the detected β-lactoglobulin content is greater than 75% of that of raw milk, preferably greater than 85% of that of raw milk; preferably, after the concentrated dairy product is diluted to a level of a total solid content of raw milk according to a concentration multiple, the detected lactoferrin content is greater than 75% of that of the raw milk, preferably greater than 85% of that of the raw milk.

The table below describes various aspects of the concentrated milk obtained by the preparation method of the present application:

**Table 2 Sensory requirements for concentrated dairy products**

| Items | Requirements |
|---|---|
| Color | Milky white or yellowish |
| Taste, smell | Having an inherent aroma of milk, no odor |
| Tissue status | Having a tissue state that the product should have, no foreign body visible in normal vision |

**Table 3 Physical and chemical indicators of concentrated dairy products**

| | |
|---|---|
| Items | Indicators |
| | Concentrated cow milk |
| Protein / (g / 100g) ≥ | 8.5 |
| Fat / (g / 100g) a ≥ | 9.5 |
| Non-fat milk solids / (g / 100g) ≥ | 24.5 |
| pH value | 6.0-7.0 |
| a is suitable only for full-fat products. | |

It can be seen from Table 4 below that the main salt ions contained in the reduced cold concentrated milk obtained in the present application are not significantly different from those of the raw milk; it is again proved that the concentration method with the forward osmosis membrane described in the present application is optimized and no reverse osmosis of ions occurs. Table 4 shows data of the main salt ions measured for raw milk and cold concentrated milk (i.e., the cold concentrated milk obtained in Example 1 of the present application).

**Table 4**

| | Calcium (mg/kg) | Magnesium (mg/kg or mg/L) | Sodium (mg/100g) |
|---|---|---|---|
| Cold concentrated milk | 1322 | 120 | 38.1 |
| Raw milk | 1190 | 115 | 40.7 |

The nutrient retention of the concentrated milk obtained by the preparation method of the present application is also sufficient. For the convenience of comparison, the cold/hot concentrated milk product was diluted with water to the solid content level of a normal cow milk, and then sent for testing; the reduced cold concentrated milk in Table 5 was obtained by diluting the cold concentrated milk obtained in Example 1, and the reduced heat concentrated milk is obtained by diluting the heat concentrated milk prepared by a conventional heat concentration method (multi-effect falling film concentration method).

**Table 5**

| | Protein (g/100g) | β -lactoglobulin (mg/mL) | Lactulose (mg/L) | Furosine (mg/100g protein) | Lactoferrin (mg/100g protein) | Alkaline phosphatase | Lactoperoxidase |
|---|---|---|---|---|---|---|---|
| Raw milk | 3.36 | 3.3 | 7.7 | 4.6 | 123.7 | Positive | Positive |
| Reduced cold concentrated milk | 3.26 | 3 | 5.8 | 3.8 | 120.7 | Positive | Positive |
| Reduced heat concentrated milk | 3.28 | 1.3 | 15.6 | 15.3 | 0.86 | Negative | Negative |

| | | | | | | | |
|---|---|---|---|---|---|---|---|
| (In the above table, "positive" means that alkaline phosphatase or lactoperoxidase is active, and "negative" means that alkaline phosphatase or lactoperoxidase is inactive. Both enzymes are positive in unprocessed raw milk.) | | | | | | | |

β-lactoglobulin is a kind of protein in fresh milk, which accounts for about 7-12% of fresh milk proteins. It has physiological activities such as cholesterol lowering and antioxidant. This protein is an important indicator for evaluating the quality of sterilized milk and pasteurized milk. For the pasteurized milk, β-lactoglobulin content in premium grade products generally reaches 2600 mg/L, and β-lactoglobulin content in superior grade products generally reaches 2000 mg/L. For the sterilized milk, β-lactoglobulin content in premium grade products generally reaches 200 mg/L, and β-lactoglobulin content in superior grade products generally reaches 100 mg/L.

It can be seen that the high indicator of β-lactoglobulin is positively correlated with the high quality of cow milk. For concentrated milk, heat treatment will reduce the value of this indicator; the cold concentrated milk obtained in this application, regardless of the concentration ratio, contains β-lactoglobulin content which is significantly higher than that of a traditional hot concentrated milk, which proves the advantages of cold concentration technology in preserving the active ingredients of cow milk.

The content of furosine in the raw milk is very small, about 0.15 mg per kilogram, and is not affected by the conditions of the cows in the normal feeding range, but the content in different dairy products varies greatly. The furosine contents of pasteurized milk, ultra-high temperature instant sterilized milk in a direct method and ultra-high temperature instant sterilized milk (UHT) in an indirect method, and the secondary sterilized milk in a maintaining method vary greatly, and the main reason for this is that the strength of the heat treatment that the raw milk is subjected to during different processing processes is different, that is, the combination of the high temperature and the holding time at this temperature is different. Improper overheating will cause a significant increase in the furosine content. Moreover, further research shows that excessive intake of furosine is harmful to human health.

Therefore, the furosine content is one of the important indicators for evaluating the quality of sterilized milk and pasteurized milk. For the pasteurized milk, the furosine content in premium grade products is usually less than 10 (mg/100g protein), and the furosine content in superior grade products is usually less than 12 (mg/100g protein). For the sterilized milk, the furosine content in premium grade products is usually less than 100 (mg/100g protein), and the furosine content in superior grade products is usually less than 200 (mg/100g protein).

It can be seen that a sufficiently low indicator of the furosine content can reflect a high quality of cow milk as a product. For concentrated milk, heat treatment will increase the value of this indicator. It can be known from the data in Table 5 that cold concentrated milk and raw milk contain significantly lower levels of furosine than that of traditional hot concentrated milk, which proves the advantages of cold concentration technology in preserving the active ingredients of cow milk.

Lactoferrin is an important non-heme iron-binding glycoprotein in cow milk with bactericidal activity. Lactoferrin is not only involved in iron transport, but also has strong biological functions such as broad-spectrum antibacterial, anti-oxidation, anti-cancer, and immune system regulation. It is considered as a new type of antibacterial and anti-cancer drug and an additive for food and feed with great development potential. Improper overheating can cause a significant drop in lactoferrin content.

It can be seen that the high indicator of lactoferrin is positively correlated with the high quality of cow milk. For concentrated milk, heat treatment will reduce the value of this indicator. It can be known from the data in Table 5 that the lactoferrin in the hot concentrated milk was significantly lower than that of the raw milk due to the destruction of the heat treatment. The cold concentrated milk contains a level of lactoferrin which is significantly higher than the level of lactoferrin in traditional hot concentrated milk and is comparable to the level of lactoferrin in fresh raw milk, demonstrating the advantages of cold concentration technology in preserving the active ingredients of cow milk.

Alkaline phosphatase and lactoperoxidase, both of which are thermosensitive enzymes, indicate whether cow milk has undergone heat treatment and is one of the indicators for evaluating whether cow milk is fresh. It can be seen from Table 5 that in cold concentrated milk, both enzymes are not inactivated, further demonstrating that the quality of the cold concentrated product is closer to that of raw milk. However, in hot concentrated milk, alkaline phosphatase and lactoperoxidase are negative, which means that the cow milk has been processed with high temperature, and the two enzymes have been inactivated.

### Continuous forward osmosis membrane system

A continuous forward osmosis membrane system comprises single or multiple forward osmosis membrane modules (preferably four forward osmosis membrane modules), a reverse osmosis membrane module for recovering a draw solution, a raw material tank, a product tank, and a draw solution tank (preferably two draw solution tanks); wherein the plurality of forward osmosis membrane modules are preferably connected to each other in series, and together with the raw material tank and the product tank constitute a feed cycle; the forward osmosis membrane, the reverse osmosis membrane and the draw solution tank (preferably two draw solution tanks) together constitute a draw solution cycle, and the forward osmosis membrane is simultaneously in two cycles, i.e., the feed cycle and the draw solution cycle.

Preferably, the flow direction of the feed cycle is opposite to the flow direction of the draw solution cycle.

The forward osmosis membrane system is preferably capable of continuously processing fresh cow milk to achieve a scaled treatment of cow milk concentration.

Preferably, a temperature barrier layer is provided outside the forward osmosis membrane module, and the temperature barrier layer is preferably polyurethane.

Preferably, a thermometer is provided at the outlet of each forward osmosis membrane module.

Preferably, the continuous forward osmosis membrane system comprises: a plurality of Electrical conductivity meters respectively disposed at the outlets of the forward osmosis membrane module and the reverse osmosis membrane module, wherein the conductivity meter at the outlet of the forward osmosis membrane is on the side of the feed cycle (feed cycle) and the conductivity meter at the outlet of the reverse osmosis membrane is on the side of the draw solution cycle. A plurality of conductivity meters monitor the conductance of solution in real time and transmit it back to the control panel in real time.

Preferably, the continuous forward osmosis membrane system comprises: a plurality of thermometers disposed at the outlet of each forward osmosis membrane, preferably on the side of the feed cycle; and a pressure gauge located at the outlet of the last forward osmosis membrane.

The continuous forward osmosis membrane system controls the flow rate so that the pressure on the side of the draw solution is always lower than that on the side of the fresh milk, thereby preventing the reverse osmosis of the salt ions of the draw solution.

Preferably, a pressure gauge and/or a turbidimeter is/are provided at the outlet of each forward osmosis membrane module. The pressure gauge and/or turbidimeter is/are used to aid monitoring. The pressure gauge is used to detect the fouling inside the membrane to detect whether there is a blocked passage. The turbidimeter is generally installed on the side of the draw solution. The turbidimeter is used to monitor the protein content in the draw solution so that the damage of the membrane can be found at the first time, preventing the raw milk from flowing into the side of the draw solution or preventing the draw solution from flowing into the side of the raw milk.

Preferably, the outlet of each forward osmosis membrane module is provided with a conduit directly to the product tank.

In one aspect, the area of the forward osmosis membrane in the forward osmosis membrane module is from 2 to 200 square meters, preferably from 10 to 180 square meters, more preferably from 20 to 120 square meters.

In another aspect, the capacity of the entire continuous forward osmosis membrane system is between 0.1 and 35 tons per hour, preferably between 1 and 20 tons. Each of the forward osmosis membrane modules is responsible for a total solid lift of 3-15%, preferably 4-12%, more preferably 5-11 %.

In another aspect, the obtained concentrated milk has a total solid content of 15 to 60%, preferably 20 to 55%, more preferably 25 to 50%; and the mobility of the draw solution cations in the obtained concentrated milk is 10% or less, preferably 5% or less, and more preferably 1% or less.

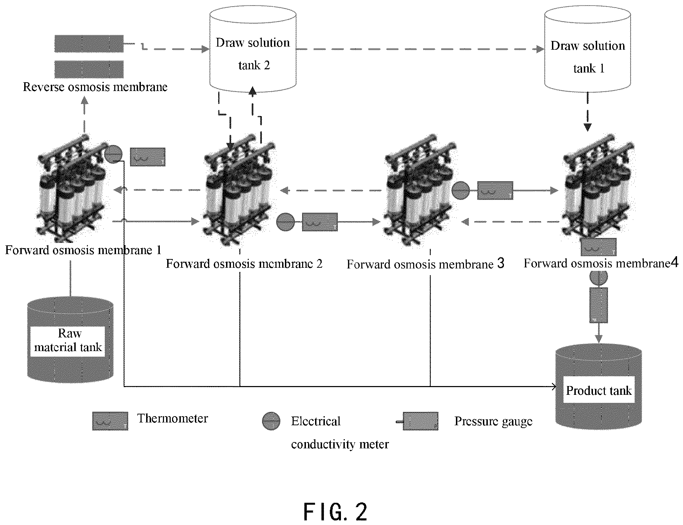

In a specific embodiment of the present application, for example, as shown in FIG. 2, the continuous system comprises four forward osmosis concentration units (forward osmosis membrane modules) (forward osmosis membrane 1, forward osmosis membrane 2, forward osmosis membrane 3, forward osmosis membrane 4); one reverse osmosis membrane module, responsible for the recovery of the draw solution; two cycles, a feed cycle (solid line) and a draw solution cycle (dashed line); five conductivity meters positioned respectively at the outlet of five concentration units (forward osmosis membrane module), wherein the conductivity meter at the outlet of the forward osmosis membrane is on the side of the feed cycle, and the conductivity meter at the outlet of the reverse osmosis membrane is on the side of the draw solution cycle, and the five conductivity meters monitor the conductivity of the solution in real time and transmit it back to the control panel in real time; four thermometers positioned at the outlet of the four forward osmosis membranes and on the side of the fresh milk; one pressure gauge positioned at the outlet of the forward osmosis membrane 4.

The forward osmosis membrane area of each forward osmosis membrane module is preferably between 10 and 180 square meters, the capacity of the entire continuous forward osmosis membrane system is preferably between 1 ton and 20 tons per hour, and each forward osmosis concentration unit is responsible for a total solid lift of 4-12%. The total solid content of the obtained concentrated milk is preferably between 25 and 50%, and the mobility of the draw solution cations in the obtained concentrated milk is preferably 5% or less.

Raw material end: unconcentrated raw milk (fresh milk) is placed in the raw material tank; after the machine is turned on, the raw milk is pumped from the raw material tank to the forward osmosis membrane 1, and the total solid content increases from 12-14% to 18-24% after concentration by the forward osmosis membrane; then the milk continues to enter into the forward osmosis membrane 2, and the total solid content increases from 18-24% to 30-34% after concentration by the forward osmosis membrane; then the milk continues to enter into the forward osmosis membrane 3, and the total solid content increases from 30-34% to 40-45% after concentration by the forward osmosis membrane; then the milk enters the forward osmosis membrane 4, and the total solid content increases to 45-60% after the final stage of concentration; then the milk enters into the product tank from the forward osmosis membrane 4 for the purpose of filling and packaging. Note that in order to realize the flexible production of the product type, pipelines are provided at the outlets of the forward osmosis membrane 1, the forward osmosis membrane 2, and the forward osmosis membrane 3 and are directly connected to the product tank, so that concentrated milks of different concentration multiples can be produced without modification through the same system.

Draw solution end: the flow direction of the draw solution is opposite to the flow direction of the raw milk. The draw solution enters the forward osmosis membrane 4 from the draw solution tank 1, and absorbs the water in the raw milk through different osmotic pressures to realize the concentration of the cow milk, and the draw solution itself is diluted; after coming out of the forward osmosis membrane 4, the draw solution continues to enter the forward osmosis membrane 3 to perform the concentration; thereafter, it enters the forward osmosis membrane 2, and the forward osmosis membrane 2 and the extracting fluid tank 2 have a loop connected therebetween. The purpose of designing the draw solution tank 2 here is to concentrate the draw solution to facilitate the concentration adjustment. If the concentration adjustment is not required, the loop can be avoided. The draw solution enters the forward osmosis membrane 1 after exiting the forward osmosis membrane 2. Then the draw solution is introduced into the reverse osmosis membrane system for the recovery of the draw solution. The resulting retentate is a salt solution of the draw solution that can be used continuously and is thus returned to the draw solution tank 1; whereas the permeate of the reverse osmosis membrane system is water, which can be recycled for other uses in the plant.

The originality of the continuous forward osmosis membrane system in this application includes, but is not limited to:
1. A temperature barrier layer is arranged outside the forward osmosis membrane module. Due to the rich nutrition of cow milk, in order to keep the concentrated milk fresh, the cold concentration system generally does not have sterilization equipment; therefore, the temperature must be strictly controlled so as not to exceed 20 degrees Celsius to prevent microbial growth and its proliferation, and the temperature barrier layer provided in this application contributes to temperature control.
2. A thermometer is provided at the end of each stage of forward osmosis (at the outlet of each stage of forward osmosis membrane module). If a thermometer reading exceeds 20 degrees Celsius, an automatic control system will guide product back through a pipeline to a raw material tank with temperature control, and then continue to concentrate after cooling down to prevent the concentrated product from being overheated and affecting the product quality.
3. The most striking difference between dairy processing and traditional water treatment is that dairy processing requires very strict control of the migration of the draw solution ions to ensure that the draw solution ions cannot migrate in large quantities even if the membrane is broken. Therefore, it is necessary to control the flow rate so that the pressure on the side of the draw solution is always lower than that on the side of the raw milk (fresh milk). In addition, the influence of the cations of the draw solution on the conductivity of the solution is also very severe. The setting of the conductivity meters allows the forward osmosis of each stage of the system to monitor the product conductance in real time. Once the reading is found to jump, it proves that the concentration has failed and needs to be shut down for maintenance.
4. In order to increase the flexibility of the process, a pipeline that directly reaches a product tank is designed at an outlet of each of the forward osmosis membranes, so that final products of various concentrations can be concentrated without changing the system hardware.
5. In order to increase reliability and sensitivity of the system, a pressure gauge and a turbidimeter can be added after each stage of forward osmosis modules to aid in monitoring. The pressure gauge is used to detect the fouling inside the membrane and whether there is a passage blocked. The turbidimeter is used to monitor the protein content in a draw solution. A draw solution is originally in a clarified state. If protein enters the draw solution, the draw solution becomes cloudy, and this change can be quickly captured by a turbidimeter. A turbidimeter can detect breakage of a membrane at the first time and feed it back to a control panel. The control panel can remind an operator of the location of the faulty membrane, so that the operator can perform subsequent product separation, membrane repair and other subsequent processing. Thereby, the raw milk is prevented from flowing into the side of the draw solution, or the draw solution is prevented from flowing into the side of the raw milk.

### Beneficial effects

### Dairy product concentration method based on forward osmosis principle

For the first time, the present application applies a forward osmosis membrane concentration technology to a dairy processing industry in a scale, and uses the forward osmosis to achieve continuous cold concentration of a complex organic system. By controlling the osmotic pressure difference of the solutions at both ends of the forward osmosis membrane, multiple concentration of the target solution is achieved; at the same time, no heat source or strong external pressure is introduced so that the main nutrient and nutrient ratio of the target solution is maintained, and the influence on the flavor of the target solution is also much lower than that of a traditional heat concentration method. At the same time, the present application optimizes the selection of a draw solution in the process of forward osmosis concentration from multiple dimensions such as the type, concentration and addition mode of the draw solution. The forward osmosis membrane concentration technique involved in the present application does not cause significant ion migration, and the quality of the resulting concentrated product is ensured.

A driving force of a forward osmosis process is provided by an osmotic pressure difference between a draw solution and a raw material liquid. The draw solution is the main factor determining the driving force of the process. Therefore, the selection of the draw solution is one of the core technologies in the forward osmosis research. An ideal draw solution needs to have the following characteristics: the draw solution is non-toxic and harmless; the draw solution can provide a high osmotic pressure to extract water from a raw material liquid; the draw solution has a low reverse solute flux; an extracting solute in the draw solution can be easily separated from water and can be recycled and used; and the draw solution has very high stability and does not chemically react with membrane materials. In order to make the forward osmosis technology better used in a cow milk concentration process, finding an efficient extracting solute (that is, the solute can be well dissolved in an aqueous solution, producing a high osmotic pressure, and can reduce the reverse solute flux during a forward osmosis process, facilitating recycling and improving a concentration efficiency) has become an urgent problem to be solved.

In view of the deficiencies of the prior art, the present application provides a solution for a draw solution suitable for the forward osmosis of the concentrated cow milk (specific parameters: including the type of the draw solution, the concentration of the draw solution, the method of adding the draw solution, etc.), and an application of the draw solution in the forward osmosis of the concentrated cow milk. The solution for the draw solution described in the present application increases a membrane flux, thereby increasing the concentration efficiency, reducing the reverse solute flux, and introducing no other impurities other than the other milk components into the raw milk. And the solution can be recycled by nanofiltration or reverse osmosis system to reduce sewage discharge and make the process greener and more environmentally friendly.

Compared with a reverse osmosis membrane concentration method and a freeze concentration method, the forward osmosis membrane concentration technology used in the present application can greatly increase the concentration multiple of the dairy product, and at the same time reduce the unit energy consumption, save running cost, and provide technical support for creating new dairy products. As we all know, freezing is a very energy-intensive operation, and may cause irreversible damage to the nature of products. In addition, the equipment maintenance cost and the operating cost of the forward osmosis concentration technology are much better than that of the reverse osmosis concentration technology and the traditional thermal concentration technology.

The use of forward osmosis membranes in the food industry (especially in the dairy industry) is vastly different from that used in traditional industries such as the water treatment industry. The primary purpose of using a forward osmosis membrane in the present application is to concentrate, while the primary purpose of using a forward osmosis membrane in the conventional water treatment industry is to desalinate or separate. Due to different main purposes, designs of the two are different, and specific parameters and process steps are also different. Specifically, through the precise control of a pressure gauge, the system of the present application ensures that even in the event of membrane damage, the draw solution will not contaminate the milk; this level of precision control is not required for equipments in other industries.

Main differences between forward osmosis membrane systems of the present application and other industries include, but are not limited to: 1) a temperature barrier layer is arranged outside the forward osmosis membrane module so that the concentration process is convenient for temperature control and prevents the proliferation of a large number of microorganisms; 2) The entire concentration system is equipped with thermometer(s), pressure gauge(s) and conductivity meter(s) to strictly control indicators of each link; 3) There are four ways to add the draw solution, and it is preferable to set up two sets of draw solution tanks to facilitate timely adjustment of the concentration and dosage of the draw solution; 4) Series concentration and isocratic concentration of multiple sets of forward osmosis membrane modules can be achieved to increase concentration efficiency.

### Continuous forward osmosis membrane system

The present application relates to a continuous forward osmosis membrane system for use in the field of dairy product concentration, which is capable of continuously processing fresh milk and achieving scaled treatment of dairy product concentration. At the same time, it ensures that the microbial indicators, physical and chemical indicators and nutritional indicators of concentrated dairy products can meet the requirements of relevant standards (because cow milk is a complex organic system that is nutritious and sensitive to the processing process, the forward osmosis membrane system used in water treatment or other fields is completely unable to meet the above requirements).

The application of a forward osmosis membrane system in the field of dairy processing is completely different from the application in the traditional water treatment field: migration of a draw solution ions needs to be controlled very strictly, ensuring that the draw solution ions cannot be migrated in large quantities even under the condition of membrane rupture. Therefore, it is necessary to control the flow rate so that the pressure on the side of the draw solution is always lower than that on the side of the raw milk (fresh milk). In addition, the influence of the draw solution cation on the conductivity of solution is very severe. The setting of conductivity meters allows each stage of the system to monitor the product conductance in real time. Once the reading is found to jump, it proves that the concentration has failed and needs to be shut down for maintenance.

Moreover, the forward osmosis membrane module in the continuous forward osmosis membrane system of the present application is provided with a temperature barrier layer on the outside to strictly control the temperature to prevent microorganisms from growing in a large amount (the cow milk is rich in nutrients, but in order to keep the concentrated milk fresh, the cold concentration system generally does not have a special sterilization equipment).

In addition, in order to increase the flexibility of the process, the continuous forward osmosis membrane system of the present application preferably also designs a pipeline to directly reach a product tank at an outlet of each forward osmosis membrane, so that final products of various concentrations can be concentrated without changing the system hardware.

In order to increase reliability and sensitivity of the system, the continuous forward osmosis membrane system of the present application also preferably adds a pressure gauge and/or a turbidimeter after each stage of the forward osmosis module to aid in monitoring. The pressure gauge is used to detect the fouling inside the membrane and to detect the presence or absence of a blocked passage. The turbidimeter is used to monitor the protein content in draw solutions, so that a membrane breakage can be found at the first time to prevent a raw milk from flowing into the side of the draw solution or prevent the draw solution from flowing into the side of a raw milk.

### DETAILED DESCRIPTION OF THE PREFERRED EMBODIMENTS

The raw cow milk used in the following examples is in compliance with the GB 19301-2010 standard. The general indicators of raw milk and the specific characterization indicators of the final product of the examples are shown in Table 7 of this section.

### Example 1

A method for preparing concentrated milk based on forward osmosis membrane technology, comprising:
1) After raw milk reaches a factory, the raw milk is subjected to physical and chemical testing, and the raw milk that meets requirements is filtered to remove physical impurities;
2) The raw milk is cleaned after the raw milk is temporarily stored, and then the raw milk is cooled to 7 degrees Celsius and stored;
3) The raw milk is sent to a forward osmosis membrane system for treatment to obtain a concentrated milk;
4) The concentrated milk is filled, frozen, and boxed to obtain a final product.

In step 1, the primary filter has a pore size of 1.00 mm and the secondary filter has a pore size of 0.50 mm.

The total solid content in the raw milk obtained after the end of step 2 is between 11.5 and 13%.

In step 3, the ratio of the flow rate on the side of the draw solution to the flow rate on the side of the raw liquid of the forward osmosis membrane is 1:2.

In step 3, the value of membrane flux oscillates between 0.8 and 1.5 LMH as the system changes dynamically.

In step 3, the initial concentration of the draw solution is 12%, and when the concentration is lowered to 5-7%, an inorganic salt is replenished until the concentration returns to 12%.

The forward osmosis membrane system used in step 3 is a plate membrane with a ratio of membrane area to feed volume of 1:4.

After the end of step 3, the total solid content of the concentrated milk is between 30 and 60%.

In step 3, the temperature of the raw milk entering the forward osmosis membrane concentration system does not exceed 7 degrees Celsius, and the temperature at the outlet does not exceed 20 degrees Celsius.

The draw solution used in step 3 is magnesium sulfate.

### Example 2

A method for preparing concentrated milk based on forward osmosis membrane technology, comprising:
1) After a raw milk reaches a factory, the raw milk is subjected to physical and chemical testing, and the raw milk that meets requirements is filtered to remove physical impurities;
2) The raw milk is cleaned after the raw milk is temporarily stored, and then the raw milk is cooled to 7 degrees Celsius and stored;
3) The raw milk is sent to the forward osmosis membrane system for treatment to obtain a concentrated milk;
4) The concentrated milk is filled, frozen, and boxed to obtain a final product.

In step 1, the primary filter has a pore size of 1.00 mm and the secondary filter has a pore size of 0.50 mm.

The total solid content in the raw milk obtained after the end of step 2 is between 11.5 and 13%.

In step 3, the ratio of the flow rate on the side of the draw solution to the flow rate on the side of the raw liquid of the forward osmosis membrane is 1:3.

In step 3, the membrane flux oscillates between 0.5 and 1 LMH as the system changes dynamically.

After the end of step 3, the total solid content of the concentrated milk is between 30 and 60%.

The initial concentration of the draw solution in step 3 is 20%, and the concentration of the draw solution is not adjusted during the concentration process.

The forward osmosis membrane system used in step 3 is a hollow membrane with a ratio of membrane area to feed volume of 1:2.

In step 3, the temperature of the raw milk entering the forward osmosis membrane concentration system does not exceed 7 degrees Celsius, and the temperature at the outlet does not exceed 20 degrees Celsius.

The draw solution used in step 3 is magnesium chloride.

### Example 3

A method for preparing concentrated milk based on forward osmosis membrane technology, comprising:
1) After a raw milk reaches a factory, the raw milk is subjected to physical and chemical testing, and the raw milk that meets requirements is filtered to remove physical impurities;
2) The raw milk is cleaned after the raw milk is temporarily stored, and then the raw milk is cooled to 7 degrees Celsius and stored;
3) The raw milk is sent to a forward osmosis membrane system for treatment to obtain a concentrated milk;
4) The concentrated milk is filled, frozen, and boxed to obtain a final product.

In step 1, the primary filter has a pore size of 1.00 mm and the secondary filter has a pore size of 0.50 mm.

The total solid content in the raw milk obtained after the end of step 2 is between 11.5 and 13%.

In step 3, the ratio of the flow rate on the side of the draw solution to the flow rate on the side of the raw liquid of the forward osmosis membrane is 1:2.

In step 3, the membrane flux oscillates between 0.8 and 1.5 LMH as the system changes dynamically.

After the end of step 3, the total solid content of the concentrated milk is between 30 and 60%.

The initial concentration of the draw solution in step 3 is 20%, and the concentration of the draw solution is not adjusted during the concentration process.

The forward osmosis membrane system used in step 3 is a hollow membrane with a ratio of membrane area to feed volume of 1:3.

In step 3, the temperature of the raw milk entering the forward osmosis membrane concentration system is 20 degrees Celsius, the forward osmosis membrane is equipped with a temperature control system, and the temperature is maintained at 20 degrees Celsius throughout the entire process.

The draw solution used in step 3 is calcium chloride.

### Example 4

A method for preparing concentrated milk based on forward osmosis membrane technology, comprising:
1) After a raw milk reaches a factory, the raw milk is subjected to physical and chemical testing, and the raw milk that meets requirements is filtered to remove physical impurities;
2) The raw milk is cleaned after the raw milk is temporarily stored, and then the raw milk is cooled to 7 degrees Celsius and stored;
3) The raw milk is sent to a forward osmosis membrane system for treatment to obtain a concentrated milk;
4) The concentrated milk is filled, frozen, and boxed to obtain a final product.

In step 1, the primary filter has a pore size of 1.00 mm and the secondary filter has a pore size of 0.50 mm.

The total solid content in the raw milk obtained after the end of step 2 is between 11.5 and 13%.

In step 3, the ratio of the flow rate on the side of the draw solution to the flow rate on the side of the raw liquid of the forward osmosis membrane is 1:3.

In step 3, the membrane flux oscillates between 0.5 and 1.2 LMH as the system changes dynamically.

After the end of step 3, the total solid content of the concentrated milk is between 30 and 60%.

In step 3, the initial concentration of the draw solution was 8%, and the concentration was controlled and maintained at 8% throughout the concentration process.

The forward osmosis membrane system used in step 3 is a spiral-wound membrane with a ratio of membrane area to feed volume of 1:1.

In step 3, the temperature of the raw milk entering the forward osmosis membrane concentration system is 20 degrees Celsius, the forward osmosis membrane is equipped with a temperature control system, and the temperature is maintained at 20 degrees Celsius throughout the entire process.

The draw solution used in step 3 is calcium chloride.

### Example 5

A method for preparing concentrated milk based on forward osmosis membrane technology, comprising:
1) After a raw milk reaches a factory, the raw milk is subjected to physical and chemical testing, and the raw milk that meets requirements is filtered to remove physical impurities;
2) The raw milk is cleaned after the raw milk is temporarily stored, and then the raw milk is cooled to 7 degrees Celsius and stored;
3) The raw milk is sent to a forward osmosis membrane system for treatment to obtain a concentrated milk;
4) The concentrated milk is filled, frozen, and boxed to obtain a final product.

In step 1, the primary filter has a pore size of 1.00 mm and the secondary filter has a pore size of 0.50 mm.

The total solid content in the raw milk obtained after the end of step 2 is between 11.5 and 13%.

In step 3, the ratio of the flow rate on the side of the draw solution to the flow rate on the side of the raw liquid of the forward osmosis membrane is 1:4.

In step 3, the membrane flux oscillates between 1 and 1.5 LMH as the system changes dynamically.

After the end of step 3, the total solid content of the concentrated milk is between 30 and 60%.

In step 3, the three-stage manner is selected to continuously increase the concentration of the draw solution, wherein the initial concentration of the initial draw solution is 6%; the concentration of the second stage draw solution is 10%; and the concentration of the third stage draw solution is 15%.

The forward osmosis membrane system used in step 3 is a spiral-wound membrane with a ratio of membrane area to feed volume of 1:1.

In step 3, the temperature of the raw milk entering the forward osmosis membrane concentration system does not exceed 7 degrees Celsius, and the temperature at the outlet does not exceed 20 degrees Celsius.

The draw solution used in step 3 is sodium chloride.

### Example 6

A method for preparing concentrated milk based on forward osmosis membrane technology, comprising:
1) After a raw milk reaches a factory, the raw milk is subjected to physical and chemical testing, and the raw milk that meets requirements is filtered to remove physical impurities;
2) The raw milk is cleaned after the raw milk is temporarily stored, and then the raw milk is cooled to 7 degrees Celsius and stored;
3) The raw milk is sent to a forward osmosis membrane system for treatment to obtain a concentrated milk;
4) The concentrated milk is filled, frozen, and boxed to obtain a final product.

In step 1, the primary filter has a pore size of 1.00 mm and the secondary filter has a pore size of 0.50 mm.

The total solid content in the raw milk obtained after the end of step 2 is between 11.5 and 13%.

In step 3, the ratio of the flow rate on the side of the draw solution to the flow rate on the side of the raw liquid of the forward osmosis membrane is 1:2.5.

In step 3, the membrane flux oscillates between 1 and 1.5 LMH as the system changes dynamically.

After the end of step 3, the total solid content of the concentrated milk is between 30 and 60%.

The initial concentration of the draw solution in step 3 is 12%. When the concentration is lowered to 5-7%, the solute of the draw solution is added so that the concentration of the draw solution is adjusted to return to 12%. The above cycle is repeated until the end of the concentration process.

The forward osmosis membrane system used in step 3 is a hollow membrane with a ratio of membrane area to feed volume of 1:1.

In step 3, the temperature of the raw milk entering the forward osmosis membrane concentration system is 15 degrees Celsius, the forward osmosis membrane is equipped with a temperature control system, and the temperature is maintained at 15 degrees Celsius throughout the entire process.

The draw solution used in step 3 is sodium chloride.

### Example 7

A method for preparing concentrated milk based on forward osmosis membrane technology, comprising:
1) After a raw milk reaches a factory, the raw milk is subjected to physical and chemical testing, and the raw milk that meets requirements is filtered to remove physical impurities;
2) The raw milk is cleaned after the raw milk is temporarily stored, and then the raw milk is cooled to 7 degrees Celsius and stored;
3) The raw milk is sent to a forward osmosis membrane system for treatment to obtain a concentrated milk;
4) The concentrated milk is filled, frozen, and boxed to obtain a final product.

In step 1, the primary filter has a pore size of 1.00 mm and the secondary filter has a pore size of 0.50 mm.

The total solid content in the raw milk obtained after the end of step 2 is between 11.5 and 13%.

In step 3, the ratio of the flow rate on the side of the draw solution to the flow rate on the side of the raw liquid of the forward osmosis membrane is 1:4.

In step 3, the membrane flux oscillates between 0.5 and 1 LMH as the system changes dynamically.

After the end of step 3, the total solid content of the concentrated milk is between 30 and 60%.

In step 3, the concentration of the draw solution is maintained at about 9% until the end of concentration.

The forward osmosis membrane system used in step 3 is a spiral-wound membrane with a ratio of membrane area to feed volume of 2:1.

In step 3, the temperature of the raw milk entering the forward osmosis membrane concentration system is 20 degrees Celsius, the forward osmosis membrane is equipped with a temperature control system, and the temperature is maintained at 20 degrees Celsius throughout the entire process.

The draw solution used in step 3 is magnesium chloride.

### Example 8

A method for preparing concentrated milk based on forward osmosis membrane technology, comprising:
1) After a raw milk reaches a factory, the raw milk is subjected to physical and chemical testing, and the raw milk that meets requirements is filtered to remove physical impurities;
2) The raw milk is cleaned after the raw milk is temporarily stored, and then the raw milk is cooled to 7 degrees Celsius and stored;
3) The raw milk is sent to a forward osmosis membrane system for treatment to obtain a concentrated milk;
4) The concentrated milk is filled, frozen, and boxed to obtain a final product.

In step 1, the primary filter has a pore size of 1.00 mm and the secondary filter has a pore size of 0.50 mm.

The total solid content in the raw milk obtained after the end of step 2 is between 11.5 and 13%.

In step 3, the ratio of the flow rate on the side of the draw solution to the flow rate on the side of the raw liquid of the forward osmosis membrane is 1:3.

In step 3, the membrane flux oscillates between 0.5 and 1 LMH as the system changes dynamically.

After the end of step 3, the total solid content of the concentrated milk is between 30 and 60%.

In step 3, the three-stage manner is selected to continuously increase the concentration of the draw solution, wherein the initial concentration of the initial draw solution is 8%; the concentration of the second stage draw solution is 12%; and the concentration of the third stage draw solution is 16%.

The forward osmosis membrane system used in step 3 is a hollow membrane with a ratio of membrane area to feed volume of 1:4.

In step 3, the temperature of the raw milk entering the forward osmosis membrane concentration system is 20 degrees Celsius, the forward osmosis membrane is equipped with a temperature control system, and the temperature is maintained at 20 degrees Celsius throughout the entire process.

The draw solution used in step 3 is magnesium sulfate.

### Example 9

A method for preparing concentrated milk based on forward osmosis membrane technology, comprising:
1) After a raw milk reaches a factory, the raw milk is subjected to physical and chemical testing, and the raw milk that meets requirements is filtered to remove physical impurities;
2) The raw milk is cleaned after the raw milk is temporarily stored, and then the raw milk is cooled to 7 degrees Celsius and stored;
3) The raw milk is sent to a separator for defatting;
4) The defatted raw milk is sent to a forward osmosis membrane system for treatment to obtain a concentrated milk;
5) The concentrated milk is filled, frozen, and boxed to obtain a final product.

In step 1, the primary filter has a pore size of 1.00 mm and the secondary filter has a pore size of 0.50 mm.

The total solid content in the raw milk obtained after the end of step 2 is between 11.5 and 13%.

The total solid content in the raw milk obtained after the end of step 3 is between 7 and 10%.

In step 4, the ratio of the flow rate on the side of the draw solution to the flow rate on the side of the raw liquid of the forward osmosis membrane is 1:3.

In step 3, the membrane flux oscillates between 1 and 2 LMH as the system changes dynamically.

After the end of step 4, the total solid content of the concentrated milk is between 30 and 60%.

In step 4, the initial concentration of the draw solution is 12%, and when the concentration is lowered to 5-7%, an inorganic salt is replenished until the concentration returns to 12%.

The forward osmosis membrane system used in step 4 is a hollow membrane with a ratio of membrane area to feed volume of 1:4.

In step 4, the temperature of the raw milk entering the forward osmosis membrane concentration system is 20 degrees Celsius, the forward osmosis membrane is equipped with a temperature control system, and the temperature is maintained at 20 degrees Celsius throughout the entire process.

The draw solution used in step 4 is calcium chloride.

### Example 10

A method for preparing concentrated milk based on forward osmosis membrane technology, comprising:
1) After a raw milk reaches a factory, the raw milk is subjected to physical and chemical testing, and the raw milk that meets requirements is filtered to remove physical impurities;
2) The raw milk is cleaned after the raw milk is temporarily stored, and then the raw milk is cooled to 7 degrees Celsius and stored;
3) The raw milk is sent to a separator for defatting;
4) The defatted raw milk is sent to a forward osmosis membrane system for treatment to obtain a concentrated milk;
5) The concentrated milk is filled, frozen, and boxed to obtain a final product.

In step 1, the primary filter has a pore size of 1.00 mm and the secondary filter has a pore size of 0.50 mm.

The total solid content in the raw milk obtained after the end of step 2 is between 11.5 and 13%.

The total solid content in the raw milk obtained after the end of step 3 is between 7 and 10%.

In step 4, the ratio of the flow rate on the side of the draw solution to the flow rate on the side of the raw liquid of the forward osmosis membrane is 1:3.

In step 3, the membrane flux oscillates between 1 and 2 LMH as the system changes dynamically.

After the end of step 4, the total solid content of the concentrated milk is between 30 and 60%.

In step 4, the initial concentration of the draw solution is 20%, and the concentration is maintained at 20%.

The forward osmosis membrane system used in step 4 is a hollow membrane with a ratio of membrane area to feed volume of 2:1.

In step 4, the temperature of the raw milk entering the forward osmosis membrane concentration system is 20 degrees Celsius, the forward osmosis membrane is equipped with a temperature control system, and the temperature is maintained at 20 degrees Celsius throughout the entire process.

The draw solution used in step 4 is lactose.

### Comparative example 1

A method for preparing concentrated milk based on forward osmosis membrane technology, comprising:
1) After a raw milk reaches a factory, the raw milk is subjected to physical and chemical testing, and the raw milk that meets requirements is filtered to remove physical impurities;
2) The raw milk is cleaned after the raw milk is temporarily stored, and then the raw milk is cooled to 7 degrees Celsius and stored;
3) The raw milk is sent to a forward osmosis membrane system for treatment to obtain a concentrated milk;
4) The concentrated milk is filled, frozen, and boxed to obtain a final product.

In step 1, the primary filter has a pore size of 1.00 mm and the secondary filter has a pore size of 0.50 mm.

The total solid content in the raw milk obtained after the end of step 2 is between 11.5 and 13%.

In step 3, the ratio of the flow rate on the side of the draw solution to the flow rate on the side of the raw liquid of the forward osmosis membrane is 1:2.5.

In step 3, the membrane flux decreases from 1 to 0 LMH as the system changes dynamically.

After the end of step 3, the total solid content of the concentrated milk is between 20 and 40%.

The initial concentration of the draw solution in step 3 was 6%, and the concentration was maintained at 6% during the concentration process.

In step 3, the temperature of the raw milk entering the forward osmosis membrane concentration system is 20 degrees Celsius, the forward osmosis membrane is equipped with a temperature control system, and the temperature is maintained at 20 degrees Celsius throughout the entire process.

The draw solution used in step 3 is calcium chloride.

As mentioned above, in the Examples, the concentrated dairy product can reach a total solid content of 30-60%, while in Comparative Example 1, the concentration of the draw solution and the manner of addition are improperly selected, so that the obtained concentrated milk end product has a maximum of only 22% of a total solid content.

### Comparative example 2

A method for preparing concentrated milk based on forward osmosis membrane technology, comprising:
1) After a raw milk reaches a factory, the raw milk is subjected to physical and chemical testing, and the raw milk that meets requirements is filtered to remove physical impurities;
2) The raw milk is cleaned after the raw milk is temporarily stored, and then the raw milk is cooled to 7 degrees Celsius and stored;
3) The raw milk is sent to a heat exchanger to be preheated to 40 degrees Celsius, and then processed by a forward osmosis membrane system to obtain a concentrated milk;
4) The concentrated milk is filled, frozen, and boxed to obtain a final product.

In step 1, the primary filter has a pore size of 1.00 mm and the secondary filter has a pore size of 0.50 mm.

The total solid content in the raw milk obtained after the end of step 2 is between 11.5 and 13%.

In step 3, the ratio of the flow rate on the side of the draw solution to the flow rate on the side of the raw liquid of the forward osmosis membrane is 1:2.5.

In step 3, the membrane flux oscillates between 0.5 and 1 LMH as the system changes dynamically.

After the end of step 3, the total solid content of the concentrated milk is between 20 and 60%.

In step 3, the initial concentration of the draw solution is 8%. The concentration is continuously increased during the concentration process to ensure that the concentration of the draw solution at the end is 15%.

In step 3, the temperature of the raw milk entering the forward osmosis membrane concentration system is 40 degrees Celsius, the forward osmosis membrane is equipped with a temperature control system, and the temperature is maintained at 40 degrees Celsius throughout the entire process.

The draw solution used in step 3 is calcium chloride.

**Table 6 Comparison of indicators of products of Example 1 and Comparative Example 2**

| Indicator name | Raw liquid temperature | Volume of fed cow milk | Draw solution | Total number of colonies of concentrated milk end products |
|---|---|---|---|---|
| Unit | degrees Celsius | L | L | Cfu/ml |
| Example 1 | 15 | 20 | 4 | 330000 |
| Comparative example 2 | 40 | 20 | 4 | As much as not countable |

From the above results, it is known that the concentrated milk product obtained in Comparative Example 2 was seriously affected due to improper temperature selection, and the microbial content was too high to be used.

### Comparative example 3

A method for preparing concentrated milk based on reverse osmosis membrane technology, including
1) After a raw milk reaches a factory, the raw milk is subjected to physical and chemical testing, and the raw milk that meets requirements is filtered to remove physical impurities;
2) The raw milk is cleaned after the raw milk is temporarily stored, and then the raw milk is cooled to 7 degrees Celsius and stored;
3) The raw milk is sent to a heat exchanger to be preheated to 20 degrees Celsius, and then processed by a reverse osmosis membrane to obtain a concentrated milk;
4) The concentrated milk is filled, frozen, and boxed to obtain a final product.

In step 1, the primary filter has a pore size of 1.00 mm and the secondary filter has a pore size of 0.50 mm.

The total solid content in the raw milk obtained after the end of step 2 is between 11.5 and 13%.

In step 3, external pressure of 5-10 bars was applied to the raw material side of the reverse osmosis membrane.

After the end of step 3, the total solid content of the concentrated milk is between 10 and 20%.

Due to the limitation of the reverse osmosis principle itself, reverse osmosis is against the osmotic pressure of nature. Under the premise of safe operation, the applied external pressure is 5-10 bar, and the total solid content that can be obtained is 20%, which cannot meet the requirements of the concentrated milk industry standard for the total solid content.

Table 7 below includes specific indicator analysis of final productsconcentrated dairy products obtained in each of the examples and comparative examples.

**Table 7**

| | Total solid content of products (%) | Protein (g/100 g) | Fat (g/100 g) | β-lactoglo bulin (mg/mL) | Lactul ose (mg/L) | Furosine (mg/100g protein) | Lactoferri n (mg/100g protein) | Alkalin e phosph atase | Lactop eroxid ase | Calciu m (mg/k g) | Magnesiu m (mg/kg or mg/L) | sodium (mg/100g) |
|---|---|---|---|---|---|---|---|---|---|---|---|---|
| Fresh raw milk | 0.122 | 3.36 | 3.68 | 3.30 | 7.70 | 4.60 | 123.70 | Positive | Positive | 1190 | 115 | 41 |
| Example 1 | 0.48 | 13.32 | 14.52 | 12.98 | 30.30 | 18.10 | 486.69 | Positive | Positive | 4232 | 552 | 160 |
| Example 2 | 0.42 | 11.57 | 12.31 | 12.36 | 26.51 | 15.84 | 425.85 | Positive | Positive | 4097 | 486 | 140 |
| Example 3 | 0.41 | 11.29 | 13.09 | 11.09 | 21.88 | 15.46 | 415.71 | Positive | Positive | 3999 | 386 | 127 |
| Example 4 | 0.55 | 15.15 | 16.88 | 14.88 | 34.71 | 22.74 | 557.66 | Positive | Positive | 5365 | 538 | 183 |
| Example 5 | 0.58 | 15.97 | 17.02 | 15.69 | 36.61 | 21.87 | 598.08 | Positive | Positive | 5257 | 547 | 293 |
| Example 6 | 0.59 | 16.25 | 17.21 | 15.96 | 37.24 | 22.35 | 598.22 | Positive | Positive | 5755 | 546 | 197 |
| Example 7 | 0.45 | 12.39 | 13.89 | 12.17 | 28.50 | 16.97 | 456.27 | Positive | Positive | 4389 | 424 | 155 |
| Example 8 | 0.45 | 12.39 | 13.12 | 12.47 | 28.40 | 16.55 | 451.09 | Positive | Positive | 4389 | 474 | 150 |
| Example 9 | 0.28 | 12.58 | 2.21 | 11.91 | 29.10 | 15.12 | 409.09 | Positive | Positive | 3728 | 489 | 129 |
| Example 10 | 0.24 | 10.28 | 1.67 | 10.91 | 27.02 | 13.19 | 405.11 | Positive | Positive | 3184 | 322 | 109 |
| Comparative example 1 | 0.21 | 5.80 | 8.82 | 5.68 | 13.25 | 7.92 | 212.93 | Positive | Positive | 2148 | 198 | 70 |
| Comparative example 2 | 0.45 | 12.39 | 13.09 | 12.37 | 28.40 | 17.97 | 456.27 | Positive | Positive | 4289 | 424 | 150 |
| Comparative example 3 | 0.19 | 5.23 | 7.89 | 5.14 | 12.99 | 7.16 | 192.65 | Positive | Positive | 1853 | 159 | 63 |

Test methods: test methods or test standards for each specific indicator in Tables 1-7 and the specification

| | |
|---|---|
| fat | GB 5009.6-2016-3 |
| total solids | GB 5413.39-2010 |
| calcium | GB 5009.92-2016-1 |
| magnesium | T/ZA-8.2.1-76-2018-1 |
| sodium | T/ZA-8.2.1-76-2018-1 |
| protein | GB 5009.5-2016 |
| alkaline phosphatase | T/ZA-8.2.1-79-2018-0 |
| lactoperoxidase | T/ZA-8.2.1-78-2018-0 |
| furosine | Identification of reconstituted milk in pasteurized milk and UHT sterilized milk NY/T 939-2016 |
| lactulose | Identification of reconstituted milk in pasteurized milk and UHT sterilized milk NY/T 939-2016 |
| lactoferrin | Research methods of the Milk and Dairy Products Quality Supervision, Inspection and Testing Center (Beijing) of the Ministry of Agriculture and Rural Affairs |
| α-lactalbumin +β-lactoglobulin | Research methods of the Milk and Dairy Products Quality Supervision, Inspection and Testing Center (Beijing) of the Ministry of Agriculture and Rural Affairs |

## Claims

1. A method for preparing a concentrated dairy product, comprising the step of processing raw milk using a forward osmosis membrane system; the forward osmosis membrane system is preferably capable of scaled processing of raw milk;
the forward osmosis membrane system comprises at least two cycles: a feed cycle and a draw solution cycle, wherein water in the raw milk is extracted from the feed cycle through the forward osmosis membrane into the draw solution cycle, the raw milk as the feed is concentrated and a draw solution is diluted;
Preferably, the concentrated dairy product is a full-fat concentrated dairy product and/or a defatted concentrated dairy product.

2. The preparation method according to claim 1, wherein the draw solution is a combination of one or more of sodium chloride, magnesium chloride, calcium chloride, lactose, and magnesium sulfate, preferably one or more of calcium chloride and magnesium sulfate, and more preferably calcium chloride.

3. The preparation method according to claim 1 or 2, wherein in the forward osmosis membrane system, the ratio of the flow rate on the draw solution side to the flow rate on the feed side is from 1:0.5 to 1:5, preferably from 1:1 to 1:3, and more preferably 1:2.

4. The preparation method according to any one of claims 1 to 3, wherein in the forward osmosis membrane system, the ratio of the forward osmosis membrane area (in square meters) to a processed feed amount (in liters) is between 7:1 and 1:7, preferably between 3:1 and 1:3.

5. The preparation method according to any one of claims 1 to 4, wherein the resulting concentrated dairy product has a total solid content of 15 to 60%, preferably 20 to 55%, and more preferably 25 to 50%.

6. The preparation method according to any one of claims 1 to 5, wherein the forward osmosis membrane is one or more of a spiral-wound membrane, a plate membrane, and a hollow membrane, preferably a spiral-wound membrane or a hollow membrane, and more preferably a hollow membrane.

7. The preparation method according to any one of claims 1 to 6, comprising the steps of:
1) physical and chemical testing of the raw milk;
2) cleaning the raw milk after the tested raw milk is temporarily stored, and then cooling;
3) sending the obtained raw milk to a forward osmosis membrane system for treatment to obtain the concentrated milk.

8. The preparation method according to claim 7, wherein the step 1) further comprises the step of filtering the raw milk which meets requirements after the test to remove physical impurities.

9. The preparation method according to claim 8, wherein in the filtration step, a primary filter has a pore size of 10-1 mm (preferably 5-1 mm, more preferably 2.00 mm), and a secondary filter has a pore size of 5-0.5 mm (preferably 3-0.5 mm, more preferably 1 mm).

10. The preparation method according to claim 7, wherein the step 2) comprises cooling the raw milk to 4-15 degrees Celsius (preferably 4-10 degrees Celsius, more preferably 7 degrees Celsius) and storing.

11. The preparation method according to any one of claims 1 to 7, wherein the way in which the draw solution is added to the forward osmosis membrane system includes:
a) when the concentration of the draw solution is reduced to 7-8%, supplementing an inorganic salt to restore the concentration of the draw solution to the initial concentration; wherein the initial concentration of the draw solution is preferably 5-20%, more preferably 12%; or
b) maintaining the initial concentration of the draw solution unchanged; wherein the initial concentration of the draw solution is preferably 5-20%, more preferably 8-10%; or
c) selecting not to adjust the concentration of the draw solution back; wherein the initial concentration of the draw solution is preferably 10-25%, more preferably 15-18%; or
d) selecting to continuously increase the concentration of the draw solution in a three-stage manner, wherein the initial concentration of the initial draw solution is preferably 5-20%, more preferably 8-10%; the concentration of the draw solution at the second stage is 8-22%, more preferably 10-12%; and the concentration of the draw solution at the third stage is 10-25%, more preferably 12-15%.

12. The preparation method according to claim 7, wherein the step of filling, quick freezing, and/or boxing is also included after step 3) to obtain the final product.

13. The preparation method according to claim 7, wherein the total solid content in the raw milk obtained after the end of step 2) is between 10 and 15% (preferably 11 to 14%, more preferably 11.5-13%).

14. The preparation method according to claim 7, wherein the temperature of the raw milk entering the forward osmosis membrane system in the step 3) is not more than 20 degrees Celsius (preferably not more than 15 degrees Celsius, more preferably not more than 7 degrees Celsius), and the temperature at the outlet is not more than 50 degrees Celsius (preferably not more than 30 degrees Celsius, more preferably not more than 20 degrees Celsius).

15. The preparation method according to claim 7, wherein a conventional defatting separation process is added before the step 3), and the obtained defatted milk is further subjected to the concentrated milk preparation according to the step 3).

16. The preparation method according to any one of claims 1 to 7, wherein the raw milk is processed with the forward osmosis membrane system, including a continuous forward osmosis membrane system having a plurality of forward osmosis membrane modules.

17. A concentrated dairy product prepared by the preparation method according to any one of claims 1 to 16, wherein the total solid content is 15 to 60%, preferably 20 to 55%, more preferably 30 to 50%; preferably, the concentrated dairy product is a full-fat product having a total solid content of from 40 to 60%, or the concentrated dairy product is a defatted product having a total solid content of from 22% to 40%; preferably, after the concentrated dairy product is diluted to a level of a total solid content of raw milk according to a concentration ratio, the detected β-lactoglobulin content is greater than 75% of that of raw milk, preferably greater than 85% of that of raw milk; preferably, after the concentrated dairy product is diluted to a level of a total solid content of raw milk according to a concentration ratio, the detected lactoferrin content is greater than 75% of that of the raw milk, preferably greater than 85% of that of the raw milk.

18. A continuous forward osmosis membrane system comprising single or multiple forward osmosis membrane modules (preferably four forward osmosis membrane modules), one reverse osmosis membrane module for recovering a draw solution, raw material tank(s), product tank(s), and draw solution tank(s) (preferably two draw solution tanks);
preferably, multiple forward osmosis membrane modules are connected to each other in series, and together with the raw material tank and the product tank constitute a feed cycle; the reverse osmosis membrane and the draw solution tank(s) (preferably two draw solution tanks) together constitute a draw solution cycle; the forward osmosis membrane is simultaneously in the two cycles, i.e., the feed cycle and the draw solution cycle;
preferably, the forward osmosis membrane system is capable of continuously processing fresh cow milk; preferably, the flow direction of the feed cycle is opposite to the flow direction of the draw solution cycle.

19. The system according to claim 18, wherein the forward osmosis membrane module is provided with a temperature barrier layer on the outside, the material of the temperature barrier layer is preferably polyurethane; preferably, a thermometer is provided at an outlet of each forward osmosis membrane module.

20. The system according to claim 18, wherein the continuous forward osmosis membrane system comprises a plurality of conductivity meters, the plurality of conductivity meters preferably are disposed at outlets of the forward osmosis membrane module and the reverse osmosis membrane module, respectively; preferably, the conductivity meter at the outlet of the osmosis membrane is on the side of the feed cycle (feed cycle), and the conductivity meter at the outlet of the reverse osmosis membrane is on the side of the draw solution cycle.

21. The system according to any one of claims 18 to 20, wherein the continuous forward osmosis membrane system comprises: a plurality of thermometers disposed at an outlet of each forward osmosis membrane (preferably on the side of the feed cycle), and a pressure gauge located at an outlet of the last forward osmosis membrane.

22. The system according to any one of claims 18 to 20, wherein pressure gauge(s) and/or turbidimeter(s) is/are provided at an outlet of each forward osmosis membrane module; preferably, the outlet of each forward osmosis membrane module is provided with a pipeline that directly reaches the product tank.

23. The system according to any one of claims 18 to 20, wherein the forward osmosis membrane area in the forward osmosis membrane module is from 2 to 200 square meters, preferably from 10 to 180 square meters, more preferably from 20 to 120 square meters.

24. The system according to any one of claims 18 to 20, wherein the capacity of the entire continuous forward osmosis membrane system is between 0.1 and 25 tons per hour, preferably between 1 and 20 tons; preferably, wherein each forward osmosis membrane module is responsible for a total solid lift of 3-15%, preferably 4-12%, more preferably 5-11%; preferably, through the entire continuous forward osmosis membrane system, the obtained concentrated milk has a total solid content of 15-60%, preferably 20-55%, more preferably 25-50%; and preferably, the mobility of an draw solution cation in the obtained concentrated milk is 10% or less, preferably 5% or less, and more preferably 1% or less.
